# EUROPEAN PATENT APPLICATION

(11) **EP 4 722 481 A1**
(43) Date of publication of application: **08.04.2026**
(21) Application number: 25205676.7
(22) Date of filing: 30.09.2025
(51) Int. Cl.: E05D 3/02, G02B 6/44, H05K 7/14

(54) **HINGED LATCHING FRAME FOR FIBER CASSETTES**

(30) Priority: 02.10.2024 US 202418904719
(71) Applicant: Panduit Corp., Tinley Park, Illinois 60487 (US)
(72) Inventor: Hibner, Max W., Tinley Park (US); Segroves, Tyler, Tinley Park (US); Berridge, Benjamin J., Tinley Park (US)
(74) Representative: Bollinghaus, Emer

(57) **Abstract**

A cassette module assembly including a removable hinged latching frame. The removable hinged latching frame enabling the cassette module to be installed through a rear-side of a patch panel for providing an installer the flexibility to conduct rear-side work and installation as desired.

## Description

### TECHNICAL FIELD

The application relates to a fiber optic management component, and more specifically to a hinged latching frame for attaching to a cassette module to enable rear-side installation of the cassette module onto a patch panel.

### BACKGROUND

Datacenter architectures using optical fiber are evolving to meet global traffic demands and the increasing number of users and applications. The rise of cloud data centers, particularly the hyper-scale cloud, has significantly changed the enterprise IT business structure, network systems, and topologies. In this space, the use of optical fiber for transmitting communication signals has grown rapidly due to its high bandwidth, low attenuation, and other distinct advantages, including radiation immunity, small size, and lightweight.

Racks and patch panels may be used to hold fiber optic cassettes for routing fiber cables within a datacenter. Now as the demand for datacenters increases across different applications and clients, there is a desire to provide flexible fiber management equipment for routing the fiber cables. For example, depending on the installation site, a front-side cassette may be desired, a rear-side cassette may be desired, or a cassette for having the capability of either a front-side or rear-side installation may be desired.

So, there is a general need to provide flexible fiber management equipment that may be adapted for different installation site characteristics as well as installer preferences. This would allow for more efficient and effective use of installation resources.

### SUMMARY

Disclosed herein is a hinged latching frame for attaching to a cassette module that enables a cassette module to be installed onto a patch panel via a rear-side installation method.

According to some embodiments, a hinged latching frame is disclosed. The hinged latching frame comprising a top frame arm including a first end and a second end, the first end including a hinge pin and the second end including a clasp mating body, a bottom frame body including a first pillar and a second pillar, the first pillar including a hinge body and the second pillar including a clasp body, wherein the hinge body includes a hinge opening configured to receive the hinge pin and the clasp body is configured to fit into an opening of the clasp mating body, and wherein the hinged latching frame is configured to transition from an open position when the clasp body is not fit into the clasp mating body to a closed position when the clasp body is fit into the clasp mating body such that the hinged latching frame is attached to a cassette module.

According to some embodiments, a cassette module assembly is disclosed. The cassette module assembly comprising a cassette module including a face plate, the face plate including a top portion and a bottom portion, and a hinged latching frame comprising a top frame arm including a first end and a second end, the first end including a hinge pin and the second end including a clasp mating body, a bottom frame body including a first pillar and a second pillar, the first pillar including a hinge body and the second pillar including a clasp body, wherein the hinge body includes a hinge opening configured to receive the hinge pin and the clasp body is configured to fit into an opening of the clasp mating body, and wherein the hinged latching frame is configured to transition from an open position when the clasp body is not fit into the clasp mating body to a closed position when the clasp body is fit into the clasp mating body such that the hinged latching frame is attached to the face plate of the cassette module.

According to an embodiment, a method is provided of installing a cassette module onto a patch panel or enclosure, from a rear-installation direction. The method comprises inserting the cassette module through an opening of the patch panel or enclosure, starting from a position at a rear of the patch panel or enclosure. When a front portion of the cassette module, which includes a face plate, has been inserted through the opening, the method comprises attaching a hinged latching frame to the face plate. The method may comprise securing the hinged latching frame to the patch panel or enclosure, for example using push pins.

A detailed description of these and other non-limiting exemplary embodiments of the hinged latching frame is set forth below together with accompanying drawings.

### BRIEF DESCRIPTION OF THE DRAWINGS

FIG. 1 is a perspective view of a hinged latching frame in an open position, according to an embodiment of the present disclosure.
FIG. 2 is a perspective view of the hinged latching frame shown in FIG. 1 in a closed position, according to an embodiment of the present disclosure.
FIG. 3 is a perspective view of the hinged latching frame shown in FIG. 1 and an exemplary cassette module onto which the hinged latching frame may be attached, according to an embodiment of the present disclosure.
FIG. 4 is a perspective view of the hinged latching frame being partially attached to the exemplary cassette module shown in FIG. 3, according to an embodiment of the present disclosure.
FIG. 5 is a perspective view of the hinged latching frame being attached to the exemplary cassette module shown in FIG. 4, according to an embodiment of the present disclosure.
FIG. 6 is a perspective view showing a portion of a patch panel where the hinged latching frame and the cassette module have been mounted to, according to an embodiment of the present disclosure.

### DETAILED DESCRIPTION

As required, detailed non-limiting embodiments are disclosed herein. However, it is to be understood that the disclosed embodiments are merely exemplary and may take various and alternative forms. The figures are not necessarily to scale, and features may be exaggerated or minimized to show details of particular components. Therefore, specific structural and functional details disclosed herein are not to be interpreted as limiting, but merely as a representative basis for teaching one skilled in the art.

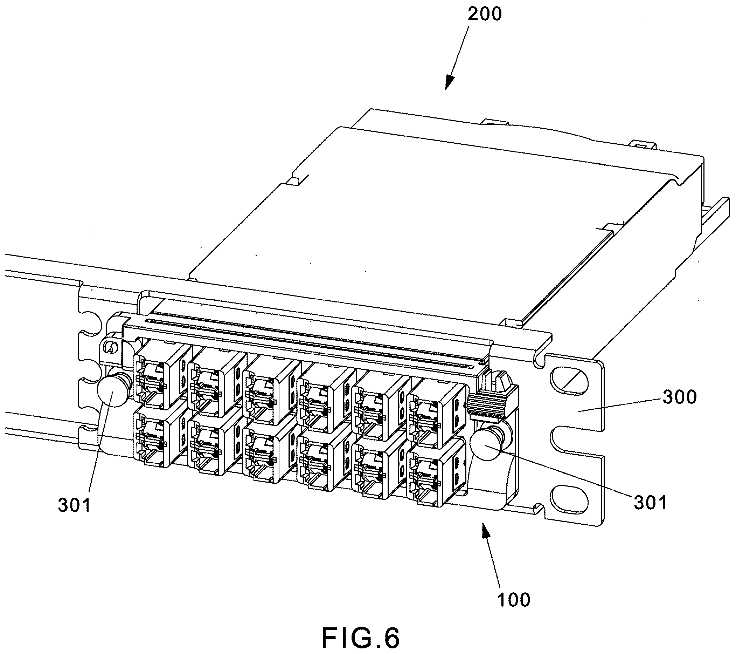

Disclosed herein is a hinged latching frame that is a separate component from a cassette module, where the hinged latching frame is configured to serve as a mounting feature for mounting the cassette module to a patch panel when the hinged latching frame is securely attached to the cassette module. By having the mounting features removable from the cassette module, the cassette module is able to be installed via a rear-side of a patch panel. For example, the hinged latching frame enables an installer to complete splicing of fibers within the cassette module while positioned at a rear of the patch panel or enclosure. Then the cassette module may be pushed through an opening of the patch panel or enclosure. Then when a front portion of the cassette module including a face plate is moved through the opening, the hinged latching frame may be attached to the face plate and push pins may be used to mount the hinged latching frame to a patch panel 300, as shown, for example, in FIG. 6.

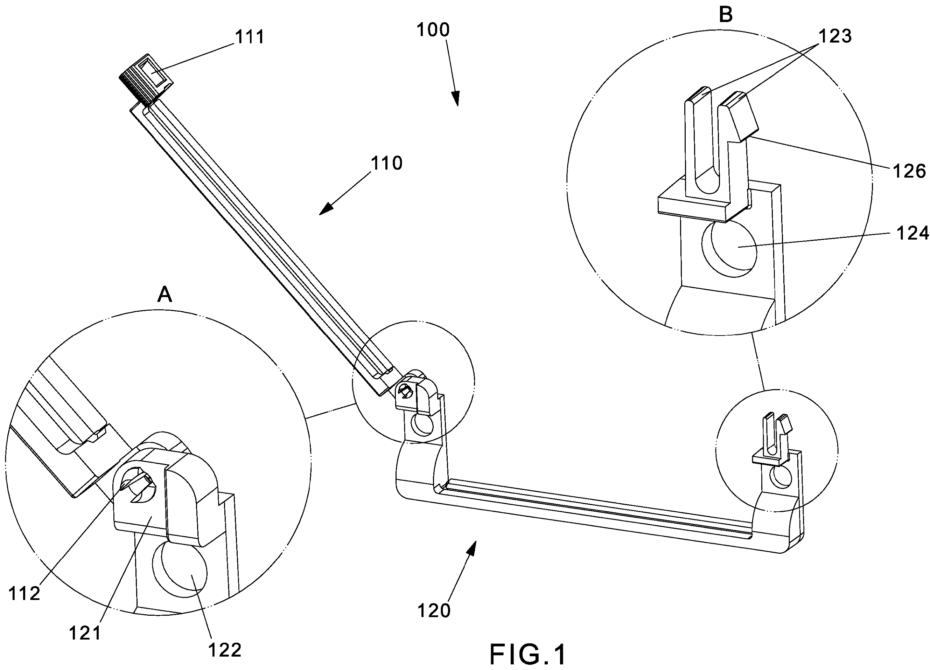

FIG. 1 shows a perspective view of a hinged latching frame 100 in an open position, according to an embodiment of this disclosure. The hinged latching frame 100 includes a top frame arm 110 and a bottom frame body 120. The top frame arm 110 includes a clasp mating body 111 at a first end of the top frame arm 110, and a hinge pin 112 at a second end of the top frame arm 110. The clasp mating body 111 includes an opening through which a clasp body 123 fits. The clasp mating body 111 may include a ribbed surface to enhance a user's ability to grip the clasp mating body 111.

The bottom frame body 120 includes a clasp body 123 at a first end of the bottom frame body 120, and a hinge body 121 at a second end of the bottom frame body 120. As shown in the magnified view of a portion A, the hinge pin 112 is configured to fit through an opening in the hinge body 121 such that the hinge pin 112 may rotate within the opening in the hinge body 121. As shown in the magnified view of a portion B, the clasp body 123 may have an upside-down "U" shape. The clasp body 123 may be made from a flexible material (e.g., plastic, polymer, metal, or other flexible material) to flex into the clasp mating body 111. The clasp body 123 in this embodiment includes a locking edge 126 for abutting against a ledge 114 of the clasp mating body 111 to lock the clasp body 123 within the clasp mating body 111 in the closed position.

Each opposite side of the bottom frame body 120 include posts (that may also be referred to as 'pillars') that include an opening 122, 124 for inserting push pins configured to secure the hinged latching frame 100 to the patch panel 300, as shown in FIG. 6.

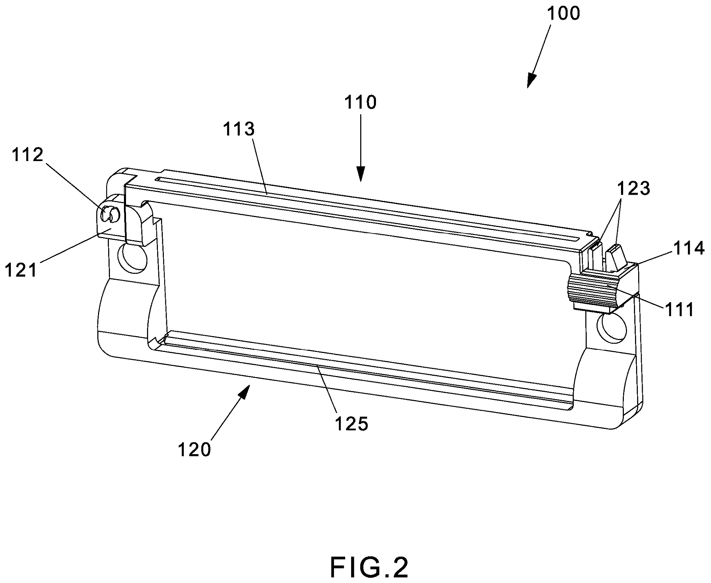

FIG. 2 shows a perspective view of the hinged latching frame 100 in a closed position. In the closed position, the clasp body 123 from the bottom frame body 120 is shown to fit through the clasp mating body 111 included in the top frame arm 110. Further in this closed position, the locking edge 126 is shown abutting against the ledge 114 of the clasp mating body 111 to lock the clasp body 123 within the clasp mating body 111. The top frame arm 110 also includes a top slot 113 that runs along a majority of the length of the top frame arm 110, and the bottom frame body 120 also includes a bottom slot 125 that runs along a majority of the length of the bottom frame body 120. The top slot 113 may be a pass-through opening, or an indented portion that runs along the length of the top frame arm 110. The bottom slot 125 may be a pass-through opening, or an indented portion that runs along the length of the bottom frame body 120.

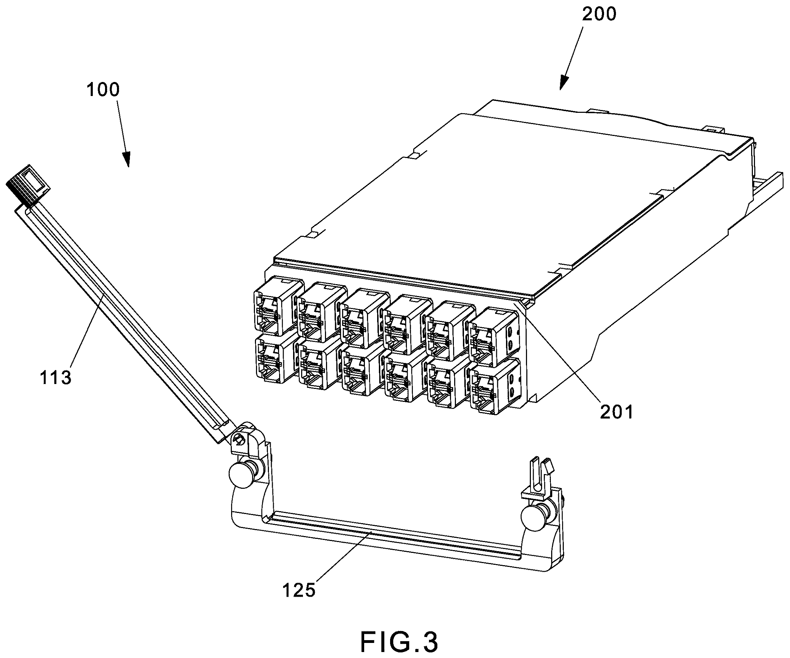

As will be shown in more detail in FIGs. 3-5, when the hinged latching frame 100 is moved into the closed position to be secured onto a cassette module 200, a top portion of a faceplate 201 is configured to fit into the top slot 113 and a bottom portion of the faceplate 201 is configured to fit into the bottom slot 125. By fitting the top portion of the faceplate 201 into the top slot 113 and fitting the bottom portion of the faceplate 201 into the bottom slot 125, the cassette module 200 may be securely attached to the hinged latching frame 100 when the hinged latching frame 100 is put into the closed position around the faceplate 201 of the cassette module 200. The faceplate 201 may include openings for installing fiber connector adapters as shown, for example, in FIG. 3. The openings may be configured to install one or more of an LC adapter, SC adapter, FC adapter, ST adapter, MPO adapter, or even very small form factor (VSFF) adapters such as an MDC adapter, MMC adapter, CS adapter, or SN adapter. According to other embodiments, the faceplate 201 may be blanked, or in other words, not include any openings.

FIG. 3 shows a perspective view of the hinged latching frame 100 in an open position and ready to receive the cassette module 200. As mentioned earlier, the hinged latching frame 100 is configured to serve as mounting features for securing the cassette module 200 to a patch panel or other cable management equipment. Because the hinged latching frame 100 is a removable and separate component from the cassette module 200, the cassette module 200 alone has a smaller profile that may enable the cassette module 200 to be installed through an opening in a patch panel from the rear-side. Had the mounting features been fixed to the cassette module 200, the cassette module 200 would likely not fit through the patch panel opening from the rear-side, and thus only front-side installations would be possible. Therefore, having the removable hinged latching frame 100 provides an installer the flexibility to have the option of installing the cassette module 200 via either a front-side or rear-side installation process.

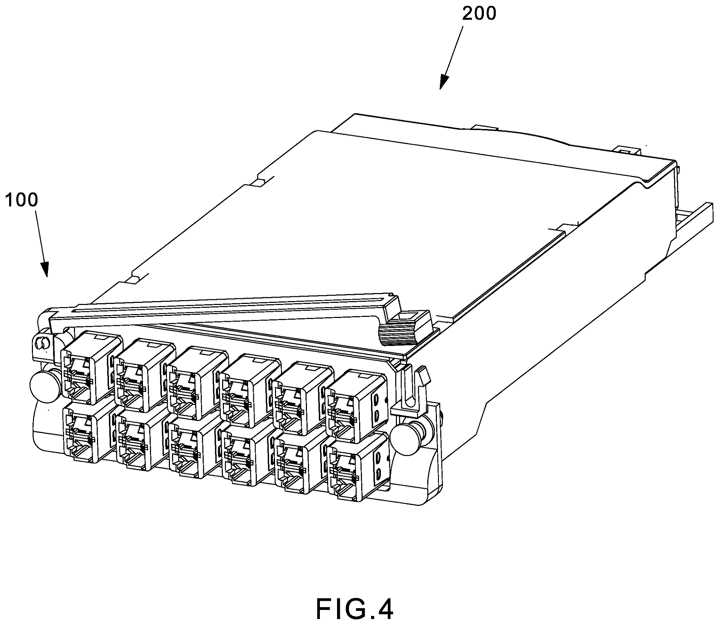

FIG. 4 shows a perspective view of the cassette module 200 in a semi-installed state where the hinged latching frame 100 is partially attached to the cassette module 200. In this semi-installed state, the bottom portion of the faceplate 201 is secured to fit into the bottom slot 125, while the top portion of the faceplate 201 is gradually fit into the top slot 113 as the top frame arm 110 rotates down until the clasp 123 is fit through the clasp mating body 111.

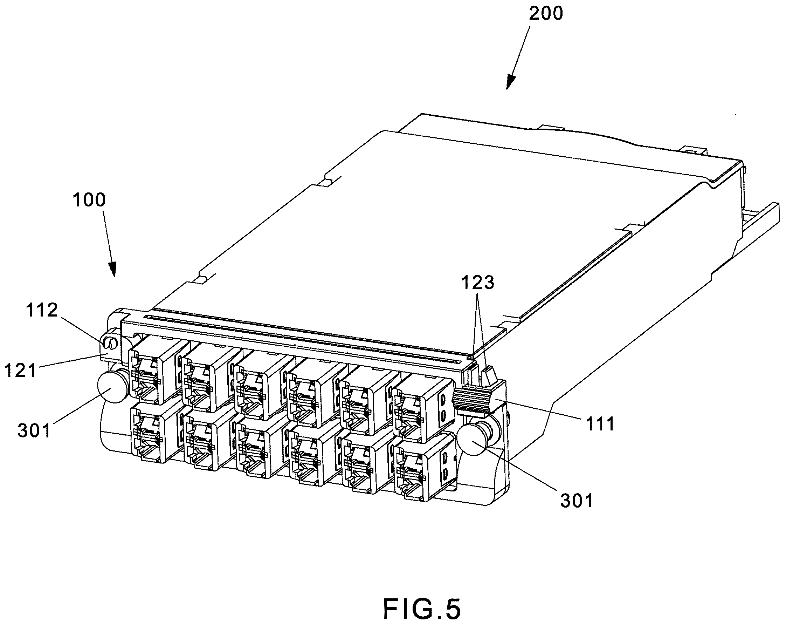

FIG. 5 shows a perspective view of the cassette module 200 in an installed state where the hinged latching frame 100 is fully attached to the cassette module 200. In this installed state, the bottom portion of the faceplate 201 is secured to fit into the bottom slot 125, and the top portion of the faceplate 201 is also fully secured to fit into the top slot 113 as the top frame arm 110 has rotated down so that the clasp 123 has fitted through the clasp mating body 111. Furthermore, in this installed state, the locking edge 126 will abut against the ledge 114 of the clasp mating body 111 to lock the clasp body 123 within the clasp mating body 111.

As shown in FIG. 6, push pins 301 may be used to fit through the openings 122, 124 to secure the hinged latching frame 100 holding the cassette module 200 onto the patch panel 300.

The present disclosure thus describes a hinged latching frame as described above. As is readily apparent from the foregoing, various non-limiting embodiments of the systems, devices, and methods have been described. While various embodiments have been illustrated and described herein, they are exemplary only and it is not intended that these embodiments illustrate and describe all those possible. Instead, the words used herein are words of description rather than limitation, and it is understood that various changes may be made to these embodiments without departing from the scope of the following claims.

## Claims

1. A hinged latching frame comprising:
a top frame arm including a first end and a second end, the first end including a hinge pin and the second end including a clasp mating body; and
a bottom frame body including a first pillar and a second pillar, the first pillar including a hinge body and the second pillar including a clasp body, wherein the hinge body includes a hinge opening configured to receive the hinge pin and the clasp body is configured to fit into an opening of the clasp mating body;
wherein the hinged latching frame is configured to transition from an open position when the clasp body is not fit into the clasp mating body to a closed position when the clasp body is fit into the clasp mating body such that the hinged latching frame is attached to a cassette module.

2. The hinged latching frame of claim 1, wherein:
the top frame arm comprises a top slot configured to hold a top portion of a face plate included in the cassette module; and
the bottom frame body comprises a bottom slot configured to hold a bottom portion of the face plate included in the cassette module.

3. The hinged latching frame of claim 1 or claim 2, wherein:
the top frame arm comprises a ledge; and
the clasp body comprises a locking edge configured to abut against the ledge when the clasp body fits within the clasp mating body.

4. The hinged latching frame of any preceding claim, wherein the clasp body is made from a flexible material.

5. The hinged latching frame of any preceding claim, wherein the clasp body is configured in a "U" shape.

6. The hinged latching frame of any preceding claim, wherein a portion of the clasp mating body includes a ribbed surface.

7. The hinged latching frame of any preceding claim, wherein the first pillar includes a first mounting opening configured to receive a first push pin, and the second pillar includes a second mounting opening configured to receive a second push pin.

8. The hinged latching frame of any preceding claim, wherein the cassette module is configured to fit through an opening on a patch panel from a rear-installation direction.

9. A cassette module assembly comprising:
a cassette module including a face plate, the face plate including a top portion and a bottom portion; and
a hinged latching frame comprising:
a top frame arm including a first end and a second end, the first end including a hinge pin and the second end including a clasp mating body;
a bottom frame body including a first pillar and a second pillar, the first pillar including a hinge body and the second pillar including a clasp body, wherein the hinge body includes a hinge opening configured to receive the hinge pin and the clasp body is configured to fit into an opening in the clasp mating body; and
wherein the hinged latching frame is configured to transition from an open position when the clasp body is not fit into the clasp mating body to a closed position when the clasp body is fit into the clasp mating body such that the hinged latching frame is attached to the face plate of the cassette module.

10. The cassette module assembly of claim 9, wherein:
the top frame arm comprises a top slot configured to hold the top portion of the face plate; and
the bottom frame body comprises a bottom slot configured to hold the bottom portion of the face plate.

11. The cassette module assembly of claim 9 or claim 10, wherein:
the top frame arm comprises a ledge; and
the clasp body comprises a locking edge configured to abut against the ledge when the clasp body fits within the clasp mating body.

12. The cassette module assembly of any of claims 9 to 11, wherein the clasp body is made from a flexible material, and/or wherein the clasp body is configured in a "U" shape.

13. The cassette module assembly of any of claims 9 to 12, wherein a portion of the clasp mating body includes a ribbed surface.

14. The cassette module assembly of any of claims 9 to 13, wherein the first pillar includes a first mounting opening configured to receive a first push pin, and the second pillar includes a second mounting opening configured to receive a second push pin.

15. The cassette module assembly of any of claims 9 to 14, wherein the cassette module is configured to fit through an opening on a patch panel from a rear-installation direction.
